(19) Europäisches Patentamt
European Patent Office
Office européen des brevets

(11) EP 2 780 383 B1

(12) FASCICULE DE BREVET EUROPEEN

(45) Date de publication et mention de la délivrance du brevet:
**16.03.2016 Bulletin 2016/11**

(21) Numéro de dépôt: **12775527.0**

(22) Date de dépôt: **24.10.2012**

(51) Int Cl.:
***C08F 293/00*** (2006.01) ***C08F 2/38*** (2006.01)
***C08F 297/02*** (2006.01) ***C09K 8/04*** (2006.01)
***C09K 8/588*** (2006.01) ***C09K 8/88*** (2006.01)

(86) Numéro de dépôt international:
**PCT/EP2012/071079**

(87) Numéro de publication internationale:
**WO 2013/060741 (02.05.2013 Gazette 2013/18)**

# (54) PREPARATION DE POLYMERES SEQUENCES AMPHIPHILES PAR POLYMERISATION RADICALAIRE MICELLAIRE A CARACTERE CONTROLE

HERSTELLUNG VON AMPHIPHILEN BLOCKPOLYMEREN DURCH KONTROLLIERTE RADIKALISCHE MIZELLARE POLYMERISATION

PREPARATION OF AMPHIPHILIC BLOCK POLYMERS BY CONTROLLED RADICAL MICELLAR POLYMERISATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2011 FR 1103246**
**05.12.2011 FR 1103707**

(43) Date de publication de la demande:
**24.09.2014 Bulletin 2014/39**

(73) Titulaire: **Rhodia Operations**
**93306 Aubervilliers (FR)**

(72) Inventeurs:
- **WILSON, James**
**60580 Coye La Forêt (FR)**
- **DESTARAC Mathias**
**31100 Toulouse (FR)**
- **CADIX, Arnaud**
**93400 Saint-Ouen (FR)**

(74) Mandataire: **Cordier, Pascal Christian et al**
**Rhodia Operations**
**Direction de la Propriété Industrielle**
**40, rue de la Haie Coq**
**93306 Aubervilliers (FR)**

(56) Documents cités:
**EP-A1- 0 801 137** **WO-A1-01/16187**
**WO-A1-2008/046156** **WO-A2-02/090409**

- **BLAGODATSKIKH I V ET AL: "New approach to the molecular characterization of hydrophobically modified polyacrylamide", POLYMER, ELSEVIER SCIENCE PUBLISHERS B.V, GB, vol. 45, no. 17, 5 août 2004 (2004-08-05), pages 5897-5904, XP004546874, ISSN: 0032-3861, DOI: 10.1016/J.POLYMER.2004.06.040**

EP 2 780 383 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

## Description

La présente invention a trait à un procédé de polymérisation particulier, qui donne accès à des polymères séquencés amphiphiles qui possèdent une structure contrôlée spécifique, à savoir, schématiquement, à base d'un squelette formé d'unités hydrophiles (hydrosolubles ou hydrodispersdible) interrompu en différents endroits par des petites séquences hydrophobes, ces séquences hydrophobes ("blocs hydrophobes") étant toutes de taille sensiblement identiques et présentes sensiblement en mêmes nombre et proportion sur toutes les chaînes polymères. L'invention concerne également les polymères amphiphiles à structure contrôlée obtenus selon cette méthode, dont la masse molaire moyenne peut être finement contrôlée au moyen de la méthode de préparation de l'invention, et qui peuvent notamment être employés à titre d'épaississants associatifs, de tensioactifs ou de modificateurs de surface.

Pour obtenir des polymères hydrosolubles ou hydrodispersdible incluant des séquences hydrophobes, une méthode actuellement connue est celle dite de "polymérisation radicalaire micellaire". Des exemples de polymérisation micellaire ont notamment été décrits dans US 4,432,881 ou bien encore dans Polymer, vol. 36 , N° 16, pp. 3197-3211 (1996), auxquels on pourra se reporter pour plus de détails.

Selon la technique particulière de "polymérisation radicalaire micellaire", qui sera désignée par "polymérisation micellaire" à des fins de concision dans la suite de la description, on synthétise des polymères séquencés de type multiblocs par copolymérisation de monomères hydrophiles et de monomères hydrophobes au sein d'un milieu dispersant aqueux (typiquement de l'eau ou un mélange eau/alcool) qui comprend :

- les monomères hydrophiles à l'état solubilisé ou dispersé dans ledit milieu ; et
- les monomères hydrophobes au sein de micelles de tensioactif formées dans ledit milieu en y introduisant ce tensioactif à une concentration supérieure à sa concentration micellaire critique (cmc).

Selon un mode particulier, les monomères hydrophobes présents au sein de micelles de tensioactifs employés en polymérisation micellaire peuvent être des monomères qui, en eux-mêmes ont la propriété de former des micelles sans avoir besoin d'ajouter des tensioactifs additionnels (monomères dits «auto-micellisables» dans la suite de la description). Selon ce mode particulier, le tensioactif employé peut être le monomère hydrophobe auto-micellisable lui-même, employé sans autre tensioactif, bien que la présence d'un tel tensioactif additionnel ne soit pas exclue. Ainsi, au sens de la présente description, lorsqu'il est fait mention de monomères hydrophobes au sein de micelles de tensioactifs, cette notion englobe aussi bien (i) des monomères hydrophobes présent au sein de micelles de tensioactif autre que ces monomères que (ii) des monomères comprenant au moins une partie ou un bloc hydrophobe et formant par eux-mêmes les micelles en milieu aqueux. Les deux modes (i) et (ii) précités sont compatibles et peuvent coexister (monomères hydrophobes au sein de micelles formées par un autre monomère auto-micellisables par exemple, ou bien encore micelles comprenant une association de tensioactifs et de monomères auto-micellisables).

En polymérisation micellaire, les monomères hydrophobes contenus dans les micelles sont dits en "solution micellaire". La solution micellaire à laquelle il est fait référence est un système micro-hétérogène qui est généralement isotrope, optiquement transparent et thermodynamiquement stable.

A noter qu'une solution micellaire du type de celle employée en polymérisation micellaire est à distinguer d'une microémulsion. En particulier, contrairement à une microémulsion, une solution micellaire se forme à toute concentration dépassant la concentration micellaire critique du tensioactif employé, avec comme seule condition que le monomère hydrophobe soit soluble au moins en une certaine mesure au sein de l'espace interne des micelles. Une solution micellaire se différencie par ailleurs d'une émulsion de par l'absence de phase homogène interne : les micelles contiennent un très faible nombre de molécules (moins de 1000 typiquement, en général moins de 500 et typiquement de 1 à 100, avec le plus souvent 1 à 50 monomères et au plus quelques centaine de molécules de tensioactif lorsqu'un tensioactif est présent) et la solution micellaire a en général des propriétés physiques similaires à celles des micelles de tensioactif sans monomères. Par ailleurs le plus souvent, une solution micellaire est transparente vis-à-vis de la lumière visible, compte tenu de la faible taille des micelles qui ne conduit pas à des phénomènes de réfraction, contrairement aux gouttes d'une émulsion, qui réfractent la lumière et lui confère son aspect trouble ou blanc caractéristique.

La technique de polymérisation micellaire conduit à des polymères séquencés caractéristiques qui contiennent chacun plusieurs blocs hydrophobes sensiblement de même taille et où cette taille peut être contrôlée. En effet, compte tenu du cantonnement des monomères hydrophobes au sein des micelles, chacun des blocs hydrophobes formés et de taille contrôlé et contient sensiblement un nombre $n_H$ défini de monomères hydrophobe, ce nombre $n_H$ pouvant être calculé comme suit (Macromolecular Chem. Physics, 202, 8, 1384-1397, 2001) :

$$n_H = N_{agg} . [M_H] / ( [tensioactif] - cmc)$$

où :

$N_{agg}$ est le numéro d'agrégation (nombre d'agrégation) du tensioactif, qui reflète le nombre de tensioactif présent dans chaque micelle

$[M_H]$ est la concentration molaire en monomère hydrophobe dans le milieu et [tensioactif] est la concentration molaire en tensioactif dans le milieu cmc est la concentration (molaire) micellaire critique

La technique de polymérisation micellaire permet ainsi un contrôle intéressant des motifs hydrophobes introduit dans les polymères formés, à savoir :

- un contrôle global de la fraction molaire d'unités hydrophobes dans le polymère (en modulant le rapport des concentrations des deux monomères); et
- un contrôle plus spécifique du nombre d'unités hydrophobes présentes dans chacun des blocs hydrophobes (en modifiant les paramètres influençant le $n_H$ défini ci-dessus).

Les polymères multiblocs obtenus par polymérisation micellaire présentent en outre un caractère associatif, ce qui en fait, *dans l'absolu,* de bons candidats pour des applications à titre d'agents viscosants..

Cependant en règle générale, la polymérisation micellaire conduit à des chaînes polymères de taille fortement inhomogène. En effet, si elles permettent un contrôle fin de la taille des blocs hydrophobes, les techniques actuelles de polymérisation micellaires conduisent à une polymérisation plus erratique des unités monomères hydrophiles. Ainsi, les procédés de polymérisation micellaire actuellement connus conduisent à des chaînes polymères comportant souvent une hétérogénéité élevée en termes de composition, avec en règle générale une répartition de masse moléculaire fortement polydispersée, sans prédéfinition possible de la masse moléculaire moyenne Mn obtenue. Cette inhomogénéité est notamment mise en évidence dans l'article précité Polymer, vol. 36 , N° 16, pp. 3197-3211 (1996).

De plus, la microstructure des polymères obtenus (à savoir la distribution des blocs hydrophobes au sein des différentes chaines) n'est pas contrôlée, ce qui est dû, notamment au temps de vie très court des chaînes propagatrices par rapport au temps global de polymérisation, combiné aux différences de réactivité des centres actifs propagateurs vis-à-vis des monomères hydrophiles et des monomères hydrophobes (ainsi qu'à leurs différence de concentrations).

En d'autres termes, la polymérisation micellaire, permet, dans le cas le plus général, d'intégrer certes des séquences hydrophobes de taille contrôlée au sein de chaînes hydrophiles, ce qui permet de synthétiser des polymères auto-associatifs, mais ce sans contrôle de la taille globale des polymères synthétisés, ni de la microstructure de ces polymères, ce qui ne permet pas de contrôler finement les propriétés de ces polymères auto-associatifs.

D'autre part, l'absence de contrôle de la microstructure ne permet pas de moduler et contrôler de façon suffisamment fine les propriétés des polymères synthétisés en polymérisation micellaire. Elle interdit de plus l'accès à des copolymères à architecture contrôlée.

En outre, les procédés de polymérisation micellaire sont en général limités à des systèmes extrêmement dilués pour permettre l'ajout et le mélange des réactifs. Les masses moléculaires obtenues en polymérisation radicalaire micellaire sont généralement de l'ordre de 500 000 à 5 000 000 g/mol, par exemple de 500 000 à 3 000 000.

Pour diminuer les dérives de composition dans les polymères issus de polymérisation micellaire il a été proposé dans US 6,207,771 un procédé d'addition semi-continue des monomères hydrophobes. Bien qu'intéressant, ce procédé ne permet cependant pas un contrôle effectif de la microstructure et ne contrôle en rien les masses moléculaires.

Un but de la présente invention est de fournir des polymères séquencés comprenant des blocs hydrophobes de taille contrôlée, du type que ceux obtenus en polymérisation micellaire usuelle, mais en améliorant le contrôle de la masse moléculaire moyenne des chaînes synthétisées et en permettant en outre un contrôle de la microstructure des polymères, à savoir une homogénéité, d'une chaîne polymère à une autre, de la répartition des séquences hydrophobes au sein du squelette hydrophile.

A cet effet, selon un premier aspect, la présente invention a pour objet un procédé de préparation d'un copolymère séquencé, qui comprend une étape (E) de polymérisation radicalaire micellaire dans laquelle on met en contact, au sein d'un milieu aqueux (M) :

- des monomères hydrophiles, solubilisés ou dispersés dans ledit milieu aqueux (M) ;

- des monomères hydrophobes sous la forme d'une solution micellaire, à savoir contenant, à l'état dispersé au sein du milieu (M), des micelles comprenant ces monomères hydrophobes (cet état dispersé pouvant notamment être obtenu à l'aide d'au moins un tensioactif);

- au moins un amorceur de polymérisation radicalaire, cet amorceur étant typiquement hydrosoluble ou hydrodispersible ; et

- au moins un agent de contrôle de polymérisation radicalaire.

Le milieu aqueux (M) employé dans l'étape (E) est un milieu comprenant de l'eau, de préférence à hauteur d'au moins 50% en masse, voire au moins 80%, par exemple au moins 90%, voire au moins 95%. Ce milieu aqueux peut éventuellement comprendre d'autres solvants que l'eau, par exemple un alcool miscible à l'eau. Ainsi, le milieu (M) peut être par exemple un mélange hydroalcoolique. Selon une variante possible, le milieu (M) peut comprendre d'autres solvants, de préférence en une concentration où ledit solvant est miscible à l'eau, ce qui peut notamment permettre de réduire la quantité de tensioactifs stabilisants employés. Ainsi, par exemple, le milieu (M) peut comprendre du pentanol, ou tout autre additif permettant de moduler le nombre d'agrégation des tensioactifs. De façon générale, il est préférable que le milieu (M) soit une phase continue d'eau et constituée d'un ou plusieurs solvants et/ou additifs miscibles entre eux et dans l'eau dans les concentrations où ils sont employés.

Par *"agent de contrôle de polymérisation radicalaire",* on entend, au sens de la présente description, un composé capable de rallonger le temps de vie des chaînes polymères en croissance dans une réaction de polymérisation et de conférer à la polymérisation un caractère vivant ou contrôlé. Cet agent de contrôle est typiquement un agent de transfert réversible tel que mis en oeuvre dans les polymérisations radicalaires contrôlées désignés sous la terminologie RAFT ou MADIX, qui mettent typiquement en oeuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. D'autres types d'agent de contrôle peuvent être envisagés (par exemple du type de ceux employé en CRP ou en ATRP).

Selon un mode particulier, l'agent de contrôle employé dans l'étape (E) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie MADIX.

Alternativement, l'agent de contrôle employé dans l'étape (E) est un composé non polymère porteur d'un groupement assurant le contrôle de la polymérisation radicalaire, notamment un groupe thiocarbonylthio -S(C=S)-.

Les travaux qui ont été réalisés par les inventeurs dans le cadre de la présente invention ont maintenant permis de mettre en évidence qu'une polymérisation radicalaire micellaire conduite en présence d'un agent de contrôle de polymérisation radicalaire du type précité conduit, en plus des avantages généralement observés en polymérisation micellaire (à savoir le contrôle de la fraction molaire d'unités hydrophobe dans les polymères ; et (ii) un contrôle du nombre d'unités hydrophobes dans chaque séquence hydrophobe), à :

- un contrôle de la masse moléculaire moyenne ; et
- un contrôle de la distribution des blocs hydrophobes au sein des différentes chaînes
- l'obtention de chaînes polymères à caractère vivant, offrant la possibilité de préparer des polymères complexes à architecture contrôlée.

Cet effet est tout particulièrement net lorsque l'agent de contrôle employé est un composé soluble ou dispersible dans le milieu aqueux (M) employé dans l'étape (E), et/ou lorsque cet agent de contrôle n'est pas propre à pénétrer dans les micelles de la solution micellaire. Cet effet peut également être observé dans le cas où l'agent de contrôle n'est pas soluble/dispersible dans le milieu (M) ou lorsque l'agent de contrôle est propre à pénétrer dans les micelles.

Selon une variante particulière, l'agent de contrôle de polymérisation radicalaire employé dans l'étape (E) est un polymère, avantageusement un oligomère, à caractère hydrosoluble ou hydrodispersible et porteur d'un groupe thiocarbonylthio -S(C=S)-, par exemple d'un groupe xanthate -SC=S-O-). Ce polymère, propre à agir à la fois comme agent de contrôle de la polymérisation et comme monomère dans l'étape (E), est également désigné par « pré-polymère » dans la suite de la description. Typiquement, ce pré-polymère est obtenu par polymérisation radicalaire de monomères hydrophiles en présence d'un agent de contrôle porteur d'un groupe thiocarbonylthio -S(C=S)-, par exemple un xanthate. Ainsi, par exemple, selon un mode de réalisation intéressant qui est illustré à la fin de la présente description, l'agent de contrôle employé dans l'étape (E) peut avantageusement être un pré-polymère porteur d'un groupe thiocarbonylthio - S(C=S)-, par exemple d'un groupe xanthate -SC=S-O-, obtenu à l'issue d'une étape ($E^0$) de polymérisation radicalaire contrôlée préalable à l'étape (E). Dans cette étape ($E^0$), on peut typiquement mettre en contact des monomères hydrophiles, avantageusement identiques à ceux mis en oeuvre dans l'étape (E) ; un amorceur de polymérisation radicalaire ;

et un agent de contrôle porteur d'un groupe thiocarbonylthio -S(C=S)-, par exemple un xanthate.

La mise en oeuvre de l'étape ($E^0$) précité préalablement à l'étape (E) permet, schématiquement, d'hydrophiliser un grand nombre d'agent de contrôle porteurs de fonctions thiocarbonylthio (par exemple des xanthate, qui sont plutôt hydrophobes par nature), en les convertissant des pré-polymères solubles ou dispersibles dans le milieu (M) de l'étape (E). De préférence, un pré-polymère synthétisé dans l'étape ($E^0$) possède une chaîne polymère courte, par exemple comprenant un enchaînement de moins de 50, voire moins de 25 unités monomères, par exemple entre 2 et 15.

De façon inattendue, il s'avère que les conditions de l'étape (E) permettent de combiner les avantages à la fois de la polymérisation radicalaire contrôlée et de la polymérisation micellaire. Dans ce cadre, les inventeurs ont en particulier maintenant mis en évidence que la présence des micelles dans le milieu de polymérisation n'affecte pas l'action des agents de contrôle, qui permettent de réaliser une polymérisation contrôlée des monomères présents au sein du milieu aqueux de façon similaire à une polymérisation radicalaire contrôlée effectuée en milieu homogène, ce qui permet de prévoir et de contrôler très aisément la masse molaire moyenne du polymère synthétisé (cette masse est d'autant plus élevées que la concentration initiale en agent de contrôle dans le milieu est faible, cette concentration dictant le nombre de chaînes polymères en croissance). Dans le même temps, la présence de l'agent de contrôle ne nuit pas non plus à l'effet intéressant observé en polymérisation, à savoir le contrôle précis de la taille des blocs hydrophobes.

En plus de ce contrôle de la polymérisation des monomères, non obtenu dans les procédés plus usuels de polymérisation micellaire, la mise en oeuvre de l'étape (E) du procédé de l'invention permet en outre, de façon également totalement surprenante, d'accéder à des polymères de taille à la fois élevée et contrôlée, ce qui s'avère tout particulièrement inattendu au vu des tailles maximales qu'on sait obtenir aujourd'hui en employant des méthodes de polymérisation radicalaire contrôlée ou de polymérisation radicalaire micellaire en l'absence d'agents de contrôle.

Dans les conditions de l'étape (E), il s'avère possible de contrôler la masse molaire moyenne en nombre des polymères jusqu'à des valeurs très élevées ; ainsi, selon un mode de réalisation particulier, les polymères synthétisés selon le procédé de l'invention peuvent présenter une masse moléculaire supérieure à 300 000 g/mol. Notamment en ajustant la concentration initiale en agent de contrôle a sein du milieu (M), l'étape (E) peut typiquement conduire à la synthèse d'un polymère séquencé ayant une masse moléculaire Mn supérieure à 400 000 g/mol. Selon un mode de réalisation intéressant du procédé de l'invention, dans l'étape (E), la concentration initiale en agent de contrôle dans le milieu est choisie telle que la masse moléculaire moyenne bloc polymère hydrophile synthétisée a une masse moléculaire en nombre Mn supérieure ou égale à 500 000 g/mol, par exemple entre 500 000 et 1 000 000 g/mol, des tailles allant jusqu'à 2 000 000 pouvant être atteintes.

Le procédé de l'invention permet également de réaliser des polymères de plus faibles masses. Selon un mode de réalisation intéressant, le polymère synthétisé est un polymère de masse comprise entre 1 000 et 100 000 g/mol, de préférence, entre 2 000 et 25 000 g/mol. Typiquement, de tels polymères de faibles masses peuvent être employés en concentration inférieure à leur concentration de recouvrement critique. En raison de leurs petites tailles, de tels polymères peuvent diffuser aux interfaces et participer à la modification des propriétés de ces interfaces ou surfaces.

Quelle que soit la taille des polymères synthétisés dans l'étape (E), ces polymères présentent en outre une microstructure très contrôlée, avec des chaînes sensiblement toutes similaires, comprenant des blocs hydrophobes répartis sensiblement de la même manière d'une chaîne polymère à une autre. Cette homogénéité de la distribution des blocs hydrophobes d'une chaîne à l'autre permet d'obtenir une population de polymère présentant tous des propriétés similaires, ce qui permet de fournir des compositions ayant des propriétés parfaitement ciblées et reproductibles, qui constituent un avantage pour certaines applications des polymères, par exemple lorsqu'on cherche à les employer pour obtenir un effet viscosant dosé de façon précise. Les polymères obtenus selon l'invention se distinguent en cela des polymères généralement obtenus en polymérisation micellaire, qui ont le plus souvent une répartition très large et très hétérogène de la distribution des blocs hydrophobe au sein des différentes chaînes.

Ainsi, la mise en oeuvre de l'étape (E) permet d'accéder à des polymères particulièrement originaux et intéressants. Ces polymères constituent, selon un deuxième aspect, un autre objet de la présente invention. Compte tenu de la mise en oeuvre des conditions de l'étape (E), ces polymères présentent le plus souvent une structure linéaire, avec des blocs hydrophobes localisés selon un gradient monotone, à savoir, de concentration constamment décroissant ou constamment croissant du début à la fin de la chaîne polymère en formation, ce qui s'explique notamment par le fait que les monomères hydrophobes présents en solution micellaire s'épuisent avec le temps.

Les polymères obtenus selon la présente invention peuvent être employés dans de nombreux domaines. Ils peuvent tout particulièrement être employés à titre d'agents tensioactifs et/ou d'agents modificateur de propriétés rhéologique, notamment à titre d'agent viscosant ou épaississant, en particulier dans des milieux aqueux.

Selon un troisième aspect, l'invention a également pour objet cette utilisation particulière des polymères spécifiques obtenus selon l'invention. L'invention a également pour objet les procédés de modification de milieux aqueux employant ces polymères à titre d'agent modificateur de rhéologie. L'invention concerne également les compositions aqueuses comprenant les polymères selon l'invention, qui peuvent notamment être employés pour l'exploitation de gisements de pétrole et/ou de gaz. L'invention a aussi pour objet les méthodes employant des compositions aqueuses

de ce type pour l'exploitation de gisements de pétrole et/ou de gaz, notamment les méthodes employant une circulation ou un placement d'une telle composition au sein d'un puits.

Les polymères spécifiques obtenus selon l'invention peuvent aussi être employés pour effectuer des fonctionnalisations de surface (hydrophilisation ou hydrophobisation selon la nature de la surface, compte tenu du caractère amphiphile des polymères), stabilisation d'interfaces de type huile/eau, ou eau/gaz.

Différentes caractéristiques et modes de réalisation de l'invention vont maintenant être décrits encore plus en détails.

***L'agent de contrôle de polymérisation radicalaire***

L'agent de contrôle mis en oeuvre dans l'étape (E) ou, le cas échéant, dans l'étape ($E^0$) du procédé de l'invention est avantageusement un composé porteur d'un groupe thiocarbonylthio -S(C=S)-. Selon un mode de réalisation particulier, l'agent de contrôle peut être porteur de plusieurs groupes thiocarbonylthio. Il peut éventuellement s'agir d'une chaîne polymère porteuse d'un tel groupe.

Ainsi, cet agent de contrôle peut par exemple répondre à la formule (A) ci-dessous :

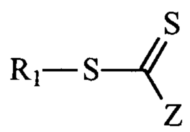

(A)

dans laquelle :

- Z représente :
    - un atome d'hydrogène,
    - un atome de Chlore,
    - un radical alkyl éventuellement substitué, aryl éventuellement substitué,
    - un hétérocycle éventuellement substitué,
    - un radical alkylthio éventuellement substitué,
    - un radical arylthio éventuellement substitué,
    - un radical alkoxy éventuellement substitué,
    - un radical aryloxy éventuellement substitué,
    - un radical amino éventuellement substitué,
    - un radical hydrazine éventuellement substitué,
    - un radical alkoxycarbonyl éventuellement substitué,
    - un radical aryloxycarbonyl éventuellement substitué,
    - un radical carboxy, acyloxy éventuellement substitué,
    - un radical aroyloxy éventuellement substitué,
    - un radical carbamoyle éventuellement substitué,
    - un radical cyano,

- un radical dialkyl- ou diaryl-phosphonato,
- un radical dialkyl-phosphinato ou diaryl-phosphinato, ou
- une chaîne polymère,

et

- $R_1$ représente :
  - un groupe alkyle, acyle, aryle, aralkyle, alcène ou alcyne éventuellement substitué,
  - un cycle carboné ou un hétérocycle, saturé ou non, aromatique éventuellement substitué, ou
  - une chaîne polymère, de préférence hydrophile ou hydrodispersible lorsque l'agent est mis en oeuvre dans l'étape (E).

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Pour les agents de contrôle de formule (A) mis en oeuvre dans l'étape (E), on préfère en général que le groupe R1 soit de nature hydrophile. Avantageusement, il s'agit d'une chaîne polymère hydrosoluble ou hydrodispersible.

Le groupe R1 peut alternativement être amphiphile, à savoir présenter à la fois un caractère hydrophile et lipophile. Il est préférable que R1 ne soit pas hydrophobe.

Concernant les agents de contrôle de formule (A) mis en oeuvre dans l'étape ($E^0$), $R_1$ peut typiquement être un groupe alkyle substitué ou non, de préférence substitué. Un agent de contrôle de formule (A) mis en oeuvre dans l'étape ($E^0$) peut néanmoins comprendre d'autres types de groupes $R_1$, notamment un cycle ou une chaîne polymère

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$, ou Z est une chaîne polymère, cette chaîne polymère peut être issue d'une polymérisation radicalaire ou ionique ou issue d'une polycondensation.

Avantageusement, on utilise comme agent de contrôle pour l'étape (E), ainsi que pour l'étape ($E^0$) le cas échéant, des composés porteurs d'une fonction xanthate -S(C=S)O-, trithiocarbonate, des dithiocarbamate, ou dithiocarbazate, par exemple porteurs d'une fonction O-ethyl xanthate de formule $-S(C=S)OCH_2CH_3$.

Lorsque l'étape ($E^0$) est conduite, il est notamment intéressant d'employer à titre d'agents de contrôle dans cette étape un composé choisi parmi les xanthates, les trithiocarbonates, les dithiocarbamates, ou les dithiocarbazates. Les xanthates se révèlent tout particulièrement intéressants, notamment ceux porteur d'une fonction O-ethyl xanthate $-S(C=S)OCH_2CH_3$, comme le O-ethyl-S-(1-methoxycarbonyl ethyl) xanthate $(CH_3CH(CO_2CH_3))S(C=S)OEt$. Un autre agent de contrôle possible dans l'étape ($E^0$) est le dibenzyltrithiocarbonate de formule $PhCH_2S(C=S)SCH_2Ph$ (où Ph=phényle).

Les pré-polymères vivants obtenus dans l'étape ($E^0$) en utilisant les agents de contrôle précités s'avèrent particulièrement intéressants pour la conduite de l'étape (E).

***Les monomères hydrophiles***

Le procédé de l'invention peut être employé avec un très grand nombre de monomères hydrophiles.

Typiquement, les monomères peuvent comprendre des monomères choisis parmi :

- les acides carboxyliques éthyléniquement insaturés, les acides sulfoniques et les acides phosphoniques, et/ou ses dérivés tels que l'acide acrylique (AA), l'acide méthacrylique, l'acide éthacrylique, l'acide $\alpha$-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyle, l'acide vinylsulfonique, l'acide (meth)allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide $\alpha$-methyl vinylphosphonique et l'acide allylphosphonique ;

- les esters d'acides mono- et di-carboxyliques $\alpha,\beta$-éthyléniquement insaturés avec C2-C3-alcanediols, par exemple, l'acrylate de 2-hydroxyethyle, le méthacrylate de 2-hydroxyethyle, l'éthacrylate de 2-hydroxyethyle, l'acrylate de 2-hydroxypropyle, le méthacrylate de 2-hydroxypropyle, l'acrylate de 3-hydroxypropyle, le méthacrylate de 3-hydroxypropyle et les (meth)acrylates de polyalkylène glycol;

- les amides d'acides mono-carboxyliques $\alpha,\beta$-éthyléniquement insaturés et leurs dérivés N-alkyle et N,N-dialkyle tels que l'acrylamide, le méthacrylamide, le N-méthyl(meth)acrylamide, le N-ethyl(meth)acrylamide, le N-propyl(meth)acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant) ;

- le N-vinyllactames et ses dérivés, par exemple, le N-vinylpryolidone, le N-vinylpiperidone ;

- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;

- les esters d'acides mono- et di-carboxyliques $\alpha,\beta$-éthyléniquement insaturés avec les aminoalcools, par exemple, le (meth)acrylate de N,N-diméthylaminométhyle, le (meth)acrylate de N,N-dimethylaminoethyle, l'acrylate de N,N-diéthylaminoéthyle, et le (meth)acrylate de N,N-dimethylaminopropyle;

- les amides d'acides mono- et di-carboxyliques $\alpha,\beta$-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide, le N-[4-(dimethylamino)butyl]acrylamide et le N-[4-(dimethylamino)butyl]methacrylamide ;

- les N-diallylamines, les N,N-diallyl-N-alkylamines, leurs sels d'additions d'acide et leurs produits de quaternisation, l'alkyle employé ici étant préférentiellement C1-C3-alkyle ;

- les composés du N,N-diallyl-N-methylamine et du N,N-diallyl-N,N-dimethylammonium, par exemple, les chlorures et les bromures ;

- les hétérocylces azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;

- les sulphobétaines ; et

- les mélanges et association de deux ou plusieurs des monomères précités.

Selon un mode de réalisation particulier, ces monomères peuvent notamment comprendre de l'acide acrylique (AA). Selon un mode de réalisation possible, les monomères sont tous des acides acryliques, mais il est également envisageable de mettre en oeuvre à titre de monomères un mélange comprenant, entre autres, de l'acide acrylique, en

mélange avec d'autres monomères hydrophiles.

Selon un mode de réalisation préférentiel, les monomères hydrophiles de l'étape (E) comprennent de l'acide (meth)acrylique et/ou des monomères (meth)acrylamido.

Au sens de la présente description, le terme « acide (meth)acrylique » englobe l'acide methacrylique, l'acide acrylique et leurs mélanges.

De la même façon, au sens de la présente description, le terme « (meth)acrylate » englobe le methacrylate, l'acrylate et leurs mélanges.

De la même façon, au sens de la présente description, le terme « (meth)acrylamide/(meth)acylamido », englobe le methacrylamide/le methacrylamido, l'acrylamide/l'acrylamido et leurs mélanges.

Les monomères contenant des groupes acides peuvent être utilisés pour la polymérisation sous la forme de l'acide libre ou sous la forme partiellement ou totalement neutralisée. Pour la neutralisation, on peut utiliser, par exemple, KOH, NaOH, l'ammoniaque ou autre base.

Selon un autre mode de réalisation particulier, les monomères employés dans le procédé de l'invention sont notamment l'acide acrylique, l'acide méthacrylique, et/ou leurs sels, et/ou leurs mélanges.

Selon un autre mode de réalisation, les monomères mis en oeuvre dans l'étape (E) comprennent (et typiquement sont constitués de) monomères (meth)acrylamide, ou plus généralement des monomères (meth)acrylamido, incluant :

- les monomères acrylamido, à savoir, l'acrylamide, son dérivé sulfonate (AMPS), l'ammonium quaternaire (APTAC) et le sulfopropyl diméthylammonium propyl acrylamide ;
- les monomères methacrylamido, tels que, le sulfopropyl diméthylammonium propyl méthacrylamide (SPP), le sulfohydroxypropyl diméthyl ammonium propyl méthacrylamido.

Selon un mode de réalisation particulier, les monomères de l'étape (E) sont des acrylamides. Un acrylamide employé dans l'étape (E) est de préférence un acrylamide non stabilisé par du cuivre. En cas de présence de cuivre, il est préférable d'introduire un agent complexant du cuivre tel que l'EDTA, le cas échéant de préférence à hauteur de 20 à 2000 ppm. Lorsqu'on utilise des acrylamides dans l'étape (E), ils peuvent typiquement être employée sous forme de poudre, de solution aqueuse (éventuellement, mais non nécessairement, stabilisée par l'éther monométhylique de l'hydroquinone MEHQ, ou bien par des sels de cuivre (de préférence additionnée d'EDTA le cas échéant)).

Quelle que soit leur nature exacte, les monomères de l'étape (E) peuvent être mis en oeuvre à des concentrations relativement élevées, typiquement à des concentrations qui seraient suffisantes pour assurer la formation du gel si l'étape (E) était conduite en l'absence d'agent de contrôle. Les inventeurs ont maintenant mis en évidence que, de façon surprenante, la polymérisation de l'étape (E) peut, au besoin être conduite dans des conditions qui correspondent à celle de la polymérisation en gel, et ce sans nécessairement conduire à une gélification du milieu réactionnel lors de la polymérisation, du fait de la présence de l'agent de contrôle. Qu'une gélification du milieu soit observée ou non, l'étape (E) permet une polymérisation de type contrôlée, contrairement à une polymérisation conduite sans agent de contrôle additionnel.

Typiquement, la concentration initiale en monomères dans le milieu réactionnel de l'étape (E) peut aller jusqu'à 40% en masse, voire jusqu'à 50% en masse, cette concentration restant en général inférieure à 30% en masse par rapport à la masse totale du milieu réactionnel. Par exemple, la concentration initiale en monomères dans le milieu réactionnel de l'étape (E) est comprise entre 0,5 % et 35%, notamment entre 1 et 20% en masse par rapport à la masse totale du milieu réactionnel.

Selon un mode de réalisation spécifique, les monomères hydrophiles employés dans l'étape (E) sont des macromonomères thermosensibles, insolubles dans l'eau au-delà d'une certaine température (point de trouble ou "cloud point" en anglais), mais solubles à plus faible température, l'étape (E) étant conduite à une température inférieure à la température du point de trouble. Les macromonomères de ce type présentent typiquement une fonction polymérisable de type acrylamido, et une chaîne latérale composée d'enchaînements oxyde d'éthylène ou oxyde de propylène (statistique ou à blocs), ou bien à base de N-isopropylacrylamide, ou de N-vinylcaprolactame. Ce mode de réalisation donne notamment accès à la préparation de polymères présentant des propriétés thermo épaississantes, utilisables par exemple dans l'industrie pétrolière.

De préférence, dans l'étape (E), tous les monomères hydrophiles sont dissous et/ou dispersés au sein du milieu aqueux (M).

*Les monomères hydrophobes*

Ces monomères, mis en oeuvre dans l'étape (E) sous la forme d'une solution micellaire, à savoir contenant, à l'état dispersé au sein du milieu (M), des micelles comprenant ces monomères hydrophobes. Sous réserve qu'ils puissent être intégrés dans des micelles de ce type, tout monomère de nature hydrophobe peut être envisagé dans l'étape (E).

A titre d'exemple non limitatif de monomère hydrophobe utilisable selon l'invention, on peut notamment citer :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrene, ou le 4-(n-decyl)styrene (le styrène s'avère notamment intéressant) ;

- les composés vinyliques halogénés, tels que halogénures de vinyle ou de vinylidène, comme des chlorures ou fluorure de vinyle ou de vinylidene, répondant à la formule

$$R_bR_cC=CX^1X^2,$$

où :

$X^1$ = F ou Cl
$X^2$ = H, F ou Cl
chacun de $R_b$ et $R_c$ représente, indépendamment :

  - H, Cl, F ; ou
  - un groupe alkyle, de préférence chloré et /ou fluoré, plus avantageusement perchloré ou perfluoré ;

- les esters d'acide mono-, di-carboxylique $\alpha,\beta$ éthyléniquement insaturés avec C2-C30-alcanols, par exemple, l'ethacrylate de methyle, le (meth)acrylate d'ethyle, l'ethacrylate d'ethyle, le (meth)acrylate de n-propyle, le (meth)acrylate d'isopropyle, le (meth)acrylate de n-butyle, le (meth)acrylate de sec-butyle, le (meth)acrylate de tert-butyle, l'ethacrylate de tert-butyle, le (meth)acrylate de n-hexyle, le (meth)acrylate de n-heptyle, le (meth)acrylate de n-octyle, le (meth)acrylate de 1,1,3,3-tetramethylbutyle, le (meth)acrylate d'ethylhexyle, le (meth)acrylate de n-nonyle, le (meth)acrylate de n-decyle, le (meth)acrylate de n-undecyle, le (meth)acrylate de tridecyle, le (meth)acrylate de myristyle, le (meth)acrylate de pentadecyle, le (meth)acrylate de palmityle, le (meth)acrylate de heptadecyle, le (meth)acrylate de nonadecyle, le (meth)acrylate d'arachinyle, le (meth)acrylate de behenyle, le (meth)acrylate de lignoceryle, le (meth)acrylate de cerotinyle, le (meth)acrylate de melissinyle, le (meth)acrylate de palmitoleoyle, le (meth)acrylate d'oleyle, le (meth)acrylate de linolyle, le (meth)acrylate de linolenyle, le (meth)acrylate de stearyle, le (meth)acrylate de lauryle et leurs mélanges ;

- les esters d'alcool de vinyle ou d'allyle avec les acides monocarboxyliques en C1-C30, par exemple, le vinyl formate, le vinyl acetate, le vinyl propionate, le vinyl butyrate, le vinyl laurate, le vinyl stearate, le vinyl propionate, le vinyl versatate et leurs mélanges ;

- les nitriles éthyléniquement insaturés, tels que l'acrylonitrile, le methacrylonitrile et leurs mélanges ;

- les esters d'acides mono- et di-carboxyliques $\alpha,\beta$ éthyléniquement insaturés avec l'alcanediols en C3-C30, par exemple, l'acrylate de 2-hydroxypropyle, le methacrylate de 2-hydroxypropyle, l'acrylate de 3-hydroxypropyle, le methacrylate de 3-hydroxypropyle, l'acrylate de 3-hydroxybutyle, le methacrylate de 3-hydroxybutyle, l'acrylate de 4-hydroxybutyle, le methacrylate de 4-hydroxybutyle, l'acrylate de 6-hydroxyhexyle, le methacrylate de 6-hydroxyhexyle, l'acrylate 3-hydroxy-2-ethylhexyle et le methacrylate de 3-hydroxy-2-ethylhexyle ;

- les amides primaires d'acides mono- et di-carboxyliques $\alpha,\beta$ éthyléniquement insaturés et les dérivés de N-alkyle et N,N-dialkyle, tels que le N-propyl(meth)acrylamide, le N-(n-butyl)(meth)acrylamide, le N-(tert-butyl)(meth)acrylamide, le N-(n-octyl)(meth)acrylamide, le N-(1,1,3,3-tetramethylbutyl)(meth)acrylamide, le N-ethylhexyl(meth)acrylamide, le N-(n-nonyl)(meth)acrylamide, le N-(n-decyl)(meth)acrylamide, le N-(n-undecyl)(meth)acrylamide, le N-tridecyl(meth)acrylamide, le N-myristyl(meth)acrylamide, le N-pentadecyl(meth)acrylamide, le N-palmityl(meth)acrylamide, le N-heptadecyl(meth)acrylamide, le N-nonadecyl(meth)acrylamide, le N-arachinyl(meth)acrylamide, le N-behenyl(meth)acrylamide, le N-lignoceryl(meth)acrylamide, le N-cerotinyl(meth)acrylamide, le N-melissinyl(meth)acrylamide, le N-palmitoleoyl(meth)acrylamide, le N-oleyl(meth)acrylamide, le N-linolyl(meth)acrylamide, le N-linolenyl(meth)acrylamide, le N-stearyl(meth)acrylamide et le N-lauryl(meth)acrylamide ;

- les N-vinyllactams et ses dérivées tels que, le N-vinyl-5-ethyl-2-pyrrolidone, le N-vinyl-6-methyl-2-piperidone, le N-vinyl-6-ethyl-2-piperidone, le N-vinyl-7-methyl-2-caprolactam et le N-vinyl-7-ethyl-2-caprolactam ;

- les esters d'acides mono- et di-carboxyliques $\alpha,\beta$ éthyléniquement insaturés avec aminoalcools, par exemple, le

(meth)acrylate de N,N-dimethylaminocyclohexyle;

- les amides d'acides mono- et di-carboxyliques $\alpha,\beta$ éthyléniquement insaturés avec diamines comprenant au moins un groupe amino primaire ou secondaire, par exemple, le N-[4-(dimethylamino)butyl]acrylamide, le N-[4-(dimethylamino)butyl]methacrylamide, le N-[2-(diethylamino)ethyl]acrylamide, le N-[4-(dimethylamino)cyclohexyl]acrylamide, le N-[4-(dimethylamino)cyclohexyl]methacrylamide ; et

- les monooléfins en C2-C8 et les hydrocarbons nonaromatiques comprenant au moins deux bonds doubles conjugués par exemple, l'éthylène, le propylène, l'isobutylène, l'isoprène, le butadiène.

Selon un mode de réalisation préférentielle, les monomères hydrophobes employés selon l'invention, peuvent être choisis parmi :

- les esters alpha-bêta insaturés d'alkyle en C1-C30 alkyle, de préférence d'alkyle en C4-C22, en particulier les acrylates et méthacrylate d'alkyle, comme les acrylates et méthacrylate de méthyle, ethyle, butyle, 2-étylhexyl, isoactyle, lauryle, isodécyle ou stéaryle (le méthacrylate de lauryle en particulier s'avère notamment intéressant) ;

- les amides alpha-bêta insaturés d'alkyle en C1-C30 alkyle, de préférence d'alkyle en C4-C22, en particulier les acrylamide et méthacrylamide d'alkyle, comme les méthyle, ethyle, butyle, 2-étylhexyle, isoactyle, lauryle, isodécyle ou stéaryle acrylamide et methacrylamide (le lauryle methacrylamide en particulier s'avère notamment intéressant) ;

- les esters de vinyle ou d'alcool allylique d'acide carboxyliques saturés tels que les acétate, propionate, versatate, ou stéarate de vinyle ou d'allyle ;

- les nitriles alpha-bêta insaturés contenant de 3 à 12 atomes de carbone, comme l'acrylonitrile ou le

- acrylonitrile,

- les alpha oléfines et les diènes conjugués ;

- les mélanges et association de deux ou plusieurs des monomères précités.

De préférence, les micelles de la solution micellaire de l'étape (E) ne contiennent pas de monomères à caractère hydrophile ou hydrodispersible. Par ailleurs, de préférence, tous les monomères hydrophobes employés dans l'étape (E) sont renfermés dans des micelles de la solution micellaire.

***Amorçage et conduite des polymérisations radicalaires des étapes (E) et ($E^0$)***

Lorsqu'il est mis en oeuvre dans l'étape (E) l'amorceur de la polymérisation radicalaire est de préférence hydrosoluble ou hydrodispersible. Hormis cette condition préférentielle, on peut employer dans l'étape (E) et l'étape ($E^0$) du procédé de l'invention tout amorceur de polymérisation radicalaire (source de radicaux libres) connu en soi et adapté aux conditions choisies pour ces étapes.

Ainsi, l'amorceur (initiateur) de polymérisation radicalaire employé selon l'invention peut par exemple être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,

- les systèmes redox comportant des combinaisons telles que :

- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs, et

- les persulfates de métal alcalin en association avec un acide arylphosphinique, tel que l'acide benzène phosphonique et autres similaires, et des sucres réducteurs.

Typiquement, la quantité d'initiateur à utiliser est déterminée de préférence de manière à ce que la quantité de radicaux générés soit d'au plus 50 % en mole, de préférence d'au plus 20% en mole, par rapport à la quantité d'agent de contrôle ou de transfert.

Tout particulièrement dans l'étape (E), il s'avère généralement intéressant d'utiliser un amorceur radicalaire de type redox, qui présente, entre autres, l'avantage de ne pas nécessiter un chauffage du milieu réactionnel (pas d'amorçage thermique) et dont les inventeurs ont en outre maintenant découvert qu'il se révèle adapté à la polymérisation micellaire de l'étape (E).

Ainsi, l'amorceur de polymérisation radicalaire employé l'étape (E) peut typiquement être un amorceur redox, typiquement ne nécessitant pas de chauffage pour leur amorçage thermique. Il s'agit typiquement d'un mélange d'au moins un agent oxydant avec au moins un agent réducteur.

L'agent oxydant présent dans ce système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,

- les mélanges de bromates hydrosolubles (bromate de métaux alcalins par exemple) avec des sulfites hydrosolubles (sulfites de métaux alcalins par exemple),

- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,

- les persulfates, perborate ou perchlorate de métaux alcalins ou d'ammonium en association avec un bisulfite de métal alcalin, tel que le métabisulfite de sodium, et des sucres réducteurs, et

- les persulfates de métal alcalin en association avec un acide arylphosphinique, tel que l'acide benzène phosphonique et autres similaires, et des sucres réducteurs.

Un système redox intéressant comprend (et de préférence consiste en) l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA, en une quantité propre à masquer sa présence.

Quelle que soit la nature de l'amorceur employé, la polymérisation radicalaire de l'étape ($E^0$) peut être effectuées sous toute forme physique appropriée, par exemple en solution dans l'eau ou dans un solvant par exemple un alcool

ou le THF, en émulsion dans l'eau (procédé dit "latex"), en masse, le cas échéant en contrôlant la température et/ou le pH afin de rendre des espèces liquides et/ou solubles ou insolubles.

Après mise en oeuvre de l'étape (E), compte tenu de la mise en oeuvre spécifique d'un agent de contrôle, on obtient des polymères fonctionnalisés par des groupes de transfert (polymères vivants). Ce caractère vivant permet si on le souhaite, d'employer ces polymères dans une réaction de polymérisation ultérieure, selon une technique bien connue en soi. Alternativement, au besoin, il est possible de désactiver ou de détruire les groupes de transfert, par exemple par hydrolyse, ozonolyse, ou réaction avec des amines, selon des moyens connus en soi. Ainsi, selon un mode de réalisation particulier, le procédé de l'invention peut comprendre, après l'étape (E), une étape (E1) d'hydrolyse, d'ozonolyse ou de réaction avec des amines, propre à désactiver et/ou détruire tout ou partie des groupes de transfert présents sur le polymère préparé dans l'étape (E).

***Tensioactifs***

Pour réaliser la solution micellaire des monomères hydrophobes employés dans l'étape (E), on peut employer tout tensioactif adapté, à titre non limitatif, on peut par exemple, employer les tensioactifs choisis dans la liste suivante :

- Les tensioactifs anioniques peuvent être choisis parmi:

  les alkylesters sulfonates, par exemple de formule $R-CH(SO_3M)-CH_2COOR'$, ou les alkylesters sulfates, par exemple de formule $R-CH(OSO_3M)-CH_2COOR'$, où R représente un radical alkyle en $C_8$-$C_{20}$, de préférence en $C_{10}$-$C_{16}$, R' un radical alkyle en $C_1$-$C_6$, de préférence en $C_1$-$C_3$ et M un cation alcalino-terreux, par exemple sodium, ou le cation ammonium. On peut citer tout particulièrement les méthyl ester sulfonates dont le radical R est en $C_{14}$-$C_{16}$;
  les alkylbenzènesulfonates, plus particulièrement en $C_9$-$C_{20}$, les alkylsulfonates primaires ou secondaires, notamment en $C_8$-$C_{22}$, les alkylglycérol sulfonates ;
  les alkylsulfates par exemple de formule $ROSO_3M$, où R représente un radical alkyle ou hydroxyalkyle en $C_{10}$-$C_{24}$, de préférence en $C_{12}$-$C_{20}$ ; M un cation de même définition que ci-dessus ;
  les alkyléthersulfates par exemple de formule $RO(OA)_nSO_3M$ où R représente un radical alkyle ou hydroxyalkyle en $C_{10}$-$C_{24}$, de préférence en $C_{12}$-$C_{20}$ ; OA représentant un groupement éthoxylé et/ou propoxylé ; M représentant un cation de même définition que ci-dessus, n variant généralement de 1 à 4, comme par exemple le lauryléthersulfate avec n = 2 ;
  les alkylamides sulfates, par exemple de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un cation de même définition que ci-dessus, ainsi que leurs dérivés polyalcoxylés (éthoxylés et/ou propoxylés) (alkylamidoether sulfates ;
  les sels d'acides gras saturés ou insaturés, par exemple comme ceux en $C_8$-$C_{24}$, de préférence en $C_{14}$-$C_{20}$ et d'un cation alcalino-terreux, les N-acyl N-alkyltaurates, les alkyliséthionates, les alkylsuccinamates et alkylsulfo succinates, les alkyl glutamates, les monoesters ou diesters de sulfosuccinates, les N-acyl sarcosinates, les polyéthoxycarboxylates ;
  les mono et di esters phosphates, par exemple de formule suivante : $(RO)_x-P(=O)(OM)_x$ ou R représente un radical alkyle, alkylaryle, arylalkyle, aryle, éventuellement polyalcoxylés, x et x' étant égaux à 1 ou 2, à la condition que la somme de x et x' soit égale à 3, M représentant un cation alcalino-terreux ;

- Les tensioactifs non ioniques peuvent être choisis parmi:

  les alcools gras alcoxylés ; par exemple les laureth-2, laureth-4, laureth-7, oleth-20, les triglycérides alcoxylés, les acides gras alcoxylés, les esters de sorbitan alcoxylés, les amines grasses alcoxylées, les di(phényl-1 éthyl) phénols alcoxylés, les tri(phényl-1 éthyl) phénols alcoxylés, les alkyls phénols alcoxylés, les produits résultant de la condensation de l'oxyde d'éthylène avec un composé hydrophobe résultant de la condensation de l'oxyde de propylène avec le propylène glycol, tels les Pluronic commercialisés par BASF ; les produits résultant de la condensation de l'oxyde d'éthylène le composé résultant de la condensation de l'oxyde de propylène avec l'éthylènediamine, tels les Tetronic commercialisés par BASF ; les alkylpolyglycosides comme ceux décrits dans US 4565647 ou les alkylglucosides; les amides d'acides gras par exemple en $C_8$-$C_{20}$, notamment les monoalkanolamides d'acides gras, par exemple la cocamide MEA ou la cocamide MIPA ;

- Les tensioactifs amphotères (amphotères vrais comprenant un groupe ioniques et un groupe potentiellement ionique de charge opposée, ou zwitterioniques comprenant simultanément deux charges opposées) peuvent être:

  les betaïnes de manière générale, notamment carboxybétaïnes de par exemple la lauryl bétaïne (Mirataine BB

de la société Rhodia) ou l'octylbétaïne ou la cocobétaïne (Mirataine BB-FLA de Rhodia); les amidoalkylbétaïnes, comme la cocamidopropyl bétaïne (CAPB) (Mirataine BDJ de la société Rhodia ou Mirataine BET C-30 de Rhodia) ;
les sulfo-bétaïnes ou sultaines comme la cocamidopropyl hydroxy sultaïne (Mirataine CBS de la société Rhodia) ;
les alkylamphoacétates et alkylamphodiacétates, comme par exemple comprenant une chaîne coco, lauryle (Miranol C2M Conc NP, C32, L32 notamment, de la société Rhodia) ;
les alkylamphopropionates ou les alkylamphodipropionates, (Miranol C2M SF) ;
les alkyl amphohydroxypropyl sultaïnes (Miranol CS),
les oxide d'alkyl amines, par exemple lauramine oxide (INCI) ;

- Les tensioactifs cationiques peuvent être les sels d'amines grasses primaires, secondaires ou tertiaires, éventuellement polyethoxylées, les sels d'ammonium quaternaires tels que les chlorures ou les bromures de tetraalkylammonium, d'alkylamidoalkylammonium, de trialkylbenzylammonium, de trialkylhydroxyalkylammonium, ou d'alkylpyridinium, les dérivés d'imidazoline, les oxydes d'amines à caractère cationique. Un exemple de tensioactif cationique est le cetrimonium chloride ou bromide (INCI) ;

- Les tensioactifs employés selon la présente invention peuvent être des copolymères à blocs contenant au moins un bloc hydrophile et au moins un bloc hydrophobe distinct du bloc hydrophile, avantageusement obtenus selon un procédé de polymérisation où :

  ($a_0$) on met en présence au sein d'une phase aqueuse au moins un monomère hydrophile (respectivement hydrophobe), au moins une source de radicaux libres et au moins un agent de contrôle de polymérisation radicalaire du type -S(C=S)- ;
  ($a_1$) on met en contact le polymère obtenu à l'issu de l'étape ($a_0$) avec au moins un monomère hydrophobe (respectivement hydrophile) distinct du monomère employé dans l'étape ($a_0$) et au moins une source de radicaux libres; ce par quoi on obtient un copolymère dibloc.

Des polymères du type tribloc, ou comprenant davantage des blocs, peuvent éventuellement être obtenus en mettant en oeuvre après l'étape ($a_1$), une étape ($a_2$) dans laquelle, on met en contact le polymère obtenu à l'issu de l'étape (a1) avec au moins un monomère distinct du monomère employé dans l'étape ($a_1$) et au moins une source de radicaux libres ; et plus généralement, en mettant en oeuvre (n+1) étapes du type des étapes ($a_1$) et ($a_2$) précitées et n est un nombre entier allant typiquement de 1 à 3, où dans chaque étape ($a_n$), avec $n \geq 1$ : on met en contact le polymère obtenu à l'issu de l'étape ($a_{n-1}$) avec au moins un monomère distinct du monomère employé dans l'étape ($a_{n-1}$) et au moins une source de radicaux libres. On peut par exemple employer selon l'invention des copolymères du type décrits dans WO03068827, WO03068848 et WO2005/021612.

***Utilisation des polymères de l'invention***

Les polymères obtenus à l'issue de l'étape (E) et de l'éventuelle étape (E1) décrite dans le paragraphe précédent sont, entre autres, utiles pour la régulation de la rhéologie de milieux liquides, notamment de milieux aqueux. Ils peuvent également être employés à titre d'épaississants associatifs, comme agents viscosants, gélifiants, modificateurs de surface, ou pour la constitution de matériaux nanonohybrides. Ils peuvent aussi être employés à titre d'agent de vectorisation.
Dans ce cadre, un polymère selon l'invention peut notamment être employé pour épaissir ou adapter la rhéologie d'un très grand nombre de compositions, par exemple des compositions destinées à véhiculer des principes cosmétiques, pharmaceutiques, vétérinaire, phytosanitaires ou bien encore détergents, par exemple. Ainsi, un polymère selon l'invention peut par exemple être employé pour modifier la rhéologie d'une composition cosmétique, d'un produit ménager, d'une composition détergente, ou bien d'une formulation destinée au domaine de l'agriculture.
Plus spécifiquement, les polymères tels qu'obtenus selon l'invention se révèlent intéressants à titre d'agent régulateur de la rhéologie dans le domaine de l'extraction du pétrole et du gaz naturel. Ils peuvent en particulier être employés pour la constitution de fluides de forage, pour la fracturation, pour la stimulation et pour la récupération assistée du pétrole.
Dans le domaine de la récupération assistée du pétrole (ou EOR, pour l'anglais « Enhanced Oil Recovery »), les polymères tels qu'obtenus selon le procédé de l'invention présentent en général une capacité d'hydratation rapide ainsi que de bonnes propriétés d'injectivité et de stabilité au cisaillement, notamment compte tenu du caractère contrôlé de la polymérisation, qui conduit à des lots de polymères homogènes en composition et en structure, avec des indices de polydispersité plus faibles que par rapport à des systèmes «non contrôlées ».
Par ailleurs, la nature des polymères synthétisable selon la présente invention est extrêmement modulable,

ce qui autorise un choix très important autant sur le squelette que sur la présence de substituants, qui peuvent être judicieusement choisis en fonction des applications envisagés pour le polymère.

Pour une application en EOR, par exemple, il est intéressant que les monomères constitutifs du polymère lui confèrent une résistance à haute température. A cet effet, les polymères destinés à une application en EOR peuvent par exemple être du type obtenu à partir de monomères choisis parmi les monomères acrylamido, methacrylamido, vinylique ou allylique. Il n'est généralement pas intéressant d'utiliser les acrylates ou methacylates a cause de leur sensibilité a l'hydrolyse. A titre d'exemple, pour améliorer la stabilité thermique du squellette, on peut employer des monomeres comme le N-méthylolacrylamide, le diméthylacylamide, N-morpholine acrylamide, vinyle pyrrolidone, le vinyle amide, des dérivés acrylamido comme l'AMPS ou l'APTAC, le sodium sytrene sulophonate et ses dérivés, ou bien encore et le sodium vinyl sulphonate.

Selon un mode de réalisation spécifique, bien adapté à des applications dans le domaine de l'EOR, les polymères présentent des fonctionnalités qui assurent une résistance aux sels et qui contrecarrent les effets de perte de viscosité, souvent rencontrés en EOR en l'absence de tels fonctionnalités sur le polymère. Des polymères selon l'invention stables vis-à-vis des sels peuvent notamment être synthétisés en employant une ou plusieurs des méthodes suivantes:

- utilisation de monomères additionnels de type sodium -3-acrylamido-3-methyl butanoate (par exemple selon la technique décrite dans US 4,584,358) ;

- utilisation de monomères additionnels de type acide sulfonique ou sulfonate, comme l'AMPS (acide acrylamido methylpropanesulfonique), et ses sels (sels de sodium notamment), ou bien le styrène sulfonate et ses sels ;

- les polymères préparés peuvent être de type polyampholytes avec un squelette hydrophile comprenant un mélange (i) d'unités monomères présentant au moins une charge négative (par exemple des sulfonates du type précités) ; et (ii) d'unités monomères présentant au moins une charge positive (par exemple l'APTAC, le MAPTAC, le DiQuat (methacryloamidopropyl-pentamethyl-1,3-propylene-2-ol-ammonium dichloride), DADMAC (diallyl dimethyl ammonium chloride) le N-vinylforamide (précurseur d'amine cationisable après hydrolyse), ou bien la vinyl pyridine ou un de ses dérivés quaternisés) ;

- utilisation de monomères additionnels de type sulphobetaines comme par exemple, le sulfopropyl diméthylammonium propyl acrylamide, le sulfopropyl diméthylammonium propyl méthacrylamide (SPP), le sulfohydroxypropyl diméthyl ammonium propyl méthacrylamido (SHPP), la 2-vinyl (3-sulfopropyl) pyridinium bétaïne, la 4-vinyl (3-sulfopropyl) pyridinium bétaïne, la 1-vinyl-3-(3-sulfopropyl) imidazolium bétaïne, ou bien encore la sulfopropyl méthyl diallyl ammonium bétaine.

Différents aspects et avantages de l'invention seront encore illustrés par les exemples ci-après dans lesquels des polymères ont été préparés selon le procédé de l'invention.

**EXEMPLES**

Dans les exemples qui suivent, la synthèse des polymères a été effectuée en employant :

- une solution A comprenant un pré-polymère poly(acrylamide) P1 vivant, réalisé dans les conditions de l'étape ($E^0$) ;
- une solution B qui est une solution micellaire de méthacrylate de lauryle (LMA) et de dodécylsulfate de sodium (SDS) ;
- une solution C qui est une solution micellaire de l'acrylate de lauryle (LA) et de dodécylsulfate de sodium (SDS) ;
- une solution D qui est une solution micellaire de l'methacrylamide de lauryle (LMAM) et de dodécylsulfate de sodium (SDS); ou
- une solution E qui est solution micellaire de LMAM et de dodécylsulfate de sodium (SDS),

préparés dans les conditions suivantes :

***• <u>Solution A contenant le pré-polymère P1 :</u>***

Dans un ballon de 250 mL, on a introduit, à température ambiante (20°C), 40 g d'une solution aqueuse d'acrylamide 50% (exempte de cuivre), 29,9 g d'eau distillée, 8,25 g de O-éthyl-S-(1-méthoxycarbonylethyl)xanthate $(CH_3CH(CO_2CH_3))S(C{=}S)OEt$, 26,6 g d'éthanol et 0,537 mg d'amorceur V-50 (2,2'-Azobis(2-methylpropionamidine) dihydrochlorure).

Le mélange a été dégazé par bullage d'azote pendant 30 minutes. Le ballon a ensuite été placé dans un bain d'huile thermostaté à 60°C, puis on a laissé la réaction de polymérisation s'effectuer sous agitation pendant 3 heures

à 60°C.

On a obtenu une conversion de 100 % (déterminée par RMN $^1H$). La masse molaire moyenne en nombre du prépolymère P1, déterminée par RMN$^1H$, est de 750 g/mol.

Le solvant a été évaporé sous vide (rotavapor; 15 mbar, 50°C) et séché pendant 120 minutes a 50°C (extrait sec mesuré près ce séchage: 37% : 115 °C, 60 min).

De l'eau distillée a ensuite été rajoutée de façon à obtenir un solution du pré-polymère a environ 40%., désignée ci-après par SOLUTION A

• ***Solution B* : *solution micellaire de LMA/SDS***

Dans un ballon de 500 mL, on a introduit, à température ambiante (20°C), 146,2g d'une solution de SDS à 30% (nSDS=0,152 mol), 168,9g d'eau distillée, 3,9g de LMA (nLMA=0,0153 mol) et 5,4g de sulfate de sodium.

Le mélange est agité a l'aide d'un barreau aimanté pendant 6h, jusqu'a l'obtention d'un solution micellaire limpide.

Dans cette solution micellaire, nH= (0.0153x62)/0,145 = 6,5
(nSDS-CMC = 0,152-0,007 = 0,145 ; NAgg=62)

• ***Solution C* : *solution micellaire de LA/SDS***

Dans un ballon de 500 mL, on a introduit, à température ambiante (20°C), 146,2g d'une solution de SDS à 30% (nSDS=0,152 mol), 169,0g d'eau distillée, 3,55g de LA (nLA=0,0153 mol) et 5,4g de sulfate de sodium.

Le mélange est agité a l'aide d'un barreau aimanté pendant 6h, jusqu'a l'obtention d'un solution micellaire limpide.

Dans cette solution micellaire, nH= (0.0153x62)/0,145 = 6,5
(nSDS-CMC = 0,152-0,007 = 0,145 ; NAgg=62)

• ***Solution D* : *solution micellaire de LMAM/SDS***

Dans un ballon de 500 mL, on a introduit, à température ambiante (20°C), 146,2g d'une solution de SDS à 30% (nSDS=0,152 mol), 169.1g d'eau distillée, 3,9g de LMAM (nLMAM=0,0153 mol) et 5,4g de sulfate de sodium.

Le mélange est réchauffé à 60°C et agité à l'aide d'un barreau aimanté pendant 2h, jusqu'a l'obtention d'un solution micellaire limpide.

Dans cette solution micellaire, nH= (0.0153x62)/0,145 = 6,5
(nSDS-CMC = 0,152-0,007 = 0,145 ; NAgg=62)

• ***Solution E* : *solution micellaire de LMAM/SDS***

Dans un ballon de 500 mL, on a introduit, à température ambiante (20°C), 146,2g d'une solution de SDS à 30% (nSDS=0,152 mol), 169.1g d'eau distillée, 2,5g de LMAM (nLMAM=0,0098 mol) et 5,4g de sulfate de sodium.

Le mélange est réchauffé à 60°C et agité à l'aide d'un barreau aimanté pendant 2h, jusqu'a l'obtention d'un solution micellaire limpide.

Dans cette solution micellaire, nH= (0.0098x62)/0,145 = 4,2
(nSDS-CMC = 0,152-0,007 = 0,145 ; NAgg=62)

Dans les exemples ci-après, la masse molaire moyenne en nombre des polymère synthétisés a été comparée, à titre indicatif, à la masse molaire moyenne en nombre théorique (Mnth), qui serait obtenue dans le cadre d'une polymérisation parfaitement contrôlée, ce qui permet de valider le caractère particulièrement bien contrôlé de la polymérisation réalisée selon l'invention, radicalement à l'opposé des résultats usuellement obtenus lorsqu'on met en oeuvre les conditions d'une polymérisation en gel.

La masse molaire moyenne en nombre théorique à laquelle il est fait référence ici est calculée selon la formule suivante :

$$\overline{Mn}(theo) = \frac{[M]_0}{[X]_0} \times M_{MU} \times Conv. + M_x$$

où :

$Mn_{(theo)}$ = Masse moyenne en nombre théorique

$[M]_0$= concentration initial en monomère
$[X]_0$= concentration initiale en agent de contrôle
$M_{MU}$= masse molaire du monomère
Conv. = conversion du monomère (rendement de la réaction)
$M_X$= Masse molaire de l'agent de contrôle

**EXEMPLE COMPARATIF : Polymérisation micellaire non contrôlée**

**Poly(Acrylamide/LMA) 97,5/2,5 - nH 6,3**

Dans un ballon de 250 mL, on a introduit, à température ambiante (20°C), 25g de solution B, 6,54g d'une solution aqueuse d'acrylamide à 50% en masse et 3,14g de persulfate d'ammonium (solution aqueuse a 0,5% en masse). Le mélange a été dégazé par bullage d'azote pendant 30 minutes. On a ajouté au milieu, en une fois, 3,138g du formaldéhyde sulfoxylate de sodium, sous forme de solution aqueuse à 0,5 % en masse. Cette solution aqueuse de formaldéhyde sulfoxylate de sodium a été préalablement dégazée par bullage d'azote.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1$H). Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit les valeurs de masse molaire moyenne en masse ($M_w$) suivant :

$$M_w = >1500000 \text{ g/mol}$$

L'échantillon a été très difficile à filtrer même à la concentration de 10 mg dans 10 mL. Le valeur est une moyenne de 2 injections et n'est donc que une ordre de grandeur de la fraction éluée.

**Exemple 1**

**Poly(Acrylamide/LMA) 97,5/2,5 mol% nH 6,3 Mnth 148000 g/mol**

Dans un ballon de 250 mL, on a introduit, à température ambiante (20°C), 50g solution B, 13,08g Acrylamide (solution aqueuse a 50% en masse), 0,088g Solution A et 3,14g Persulfate d'ammonium (solution aqueuse a 0,5% en masse). Le mélange a été dégazé par bullage d'azote pendant 30 minutes. On a ajouté au milieu, en une fois, 3,138g du formaldéhyde sulfoxylate de sodium, sous forme de solution aqueuse à 0,5 % en masse. Cette solution aqueuse de formaldéhyde sulfoxylate de sodium a été préalablement dégazée par bullage d'azote.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1$H).

Le gel ainsi obtenue a été soumis à une hydrolyse basique. Dans un ballon 100 ml on a introduit à température ambiante, 2g de gel et 8g d'eau distillé. La solution a été ajustée à pH 10 par l'ajout d'un solution de NaOH à 50% en masse. Le ballon a été ensuite chauffé à 65°C pendant 5 jours. La solution polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit la valeur de masse molaire moyenne en masse ($M_w$) suivant : 230000 g/mol

**Exemple 2**

**Poly(Acrylamide/LMA) 97,5/2,5 mol% nH 6,3 Mnth 740000 g/mol**

Dans un ballon de 250 mL, on a introduit, à température ambiante (20°C), 50g solution B, 13,08g Acrylamide (solution aqueuse a 50% en masse), 0,018g Solution A et 3,14g Persulfate d'ammonium (solution aqueuse a 0,5% en masse). Le mélange a été dégazé par bullage d'azote pendant 30 minutes. On a ajouté au milieu, en une fois, 3,138g du formaldéhyde sulfoxylate de sodium, sous forme de solution aqueuse à 0,5 % en masse. Cette solution aqueuse de formaldéhyde sulfoxylate de sodium a été préalablement dégazée par bullage d'azote.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1$H).

Le gel ainsi obtenue a été soumis à une hydrolyse basique. Dans un ballon 100 ml on a introduit à température ambiante, 2g de gel et 8g d'eau distillé. La solution a été ajustée à pH 10 par l'ajout d'une solution de NaOH à 50% en masse. Le ballon a été ensuite chauffé à 65°C pendant 5 jours. La solution polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit la valeur de masse molaire moyenne en masse ($M_w$) suivant : 602000 g/mol

**Exemple 3**

**Poly(Acrylamide/LMA) 97,5/2,5 mol% nH 6,3 Mnth 15000 g/mol**

Dans un ballon de 250 mL, on a introduit, à température ambiante (20°C), 50g solution B, 13,08g Acrylamide (solution aqueuse a 50% en masse), 0,88g Solution A et 6,26g Persulfate d'ammonium (solution aqueuse a 0,5% en masse). Le mélange a été dégazé par bullage d'azote pendant 30 minutes. On a ajouté au milieu, en une fois, 6,26g du formaldéhyde sulfoxylate de sodium, sous forme de solution aqueuse à 0,5 % en masse. Cette solution aqueuse de formaldéhyde sulfoxylate de sodium a été préalablement dégazée par bullage d'azote.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1$H).

Le gel ainsi obtenue a été soumis à une hydrolyse basique. Dans un ballon 100 ml on a introduit à température ambiante, 2g de gel et 8g d'eau distillé. La solution a été ajustée à pH 10 par l'ajout d'une solution de NaOH à 50% en masse. Le ballon a été ensuite chauffé à 65°C pendant 5 jours. La solution polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit la valeur de masse molaire moyenne en masse ($M_w$) suivant : 29800 g/mol.

**Exemple 4**

**Poly(Acrylamide/LMA) 97,5/2,5 mol% nH 6,3 Mnth 74000 g/mol**

Dans un ballon de 250 mL, on a introduit, à température ambiante (20°C), 50g solution B, 13,08g Acrylamide (solution aqueuse a 50% en masse), 0,176g Solution A et 6,26g Persulfate d'ammonium (solution aqueuse a 0,5% en masse). Le mélange a été dégazé par bullage d'azote pendant 30 minutes. On a ajouté au milieu, en une fois, 6,26g du formaldéhyde sulfoxylate de sodium, sous forme de solution aqueuse à 0,5 % en masse. Cette solution aqueuse de formaldéhyde sulfoxylate de sodium a été préalablement dégazée par bullage d'azote.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1$H).

Le gel ainsi obtenue a été soumis à une hydrolyse basique. Dans un ballon 100 ml on a introduit à température ambiante, 2g de gel et 8g d'eau distillé. La solution a été ajustée à pH 10 par l'ajout d'une solution de NaOH à 50% en masse. Le ballon a été ensuite chauffé à 65°C pendant 5 jours. La solution polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit la valeur de masse molaire moyenne en masse ($M_w$) suivant : 65000 g/mol.

**Exemple 5**

**Poly(Acrylamide/LMA) 97,5/2,5 mol% nH 6,3 Mnth 370000 g/mol**

Dans un ballon de 250 mL, on a introduit, à température ambiante (20°C), 50g solution B, 13,08g Acrylamide (solution aqueuse a 50% en masse), 0,035g Solution A et 6,26g Persulfate d'ammonium (solution aqueuse a 0,5% en masse). Le mélange a été dégazé par bullage d'azote pendant 30 minutes. On a ajouté au milieu, en une fois, 6,26g

du formaldéhyde sulfoxylate de sodium, sous forme de solution aqueuse à 0,5 % en masse. Cette solution aqueuse de formaldéhyde sulfoxylate de sodium a été préalablement dégazée par bullage d'azote.

On a alors laissé la réaction de polymérisation se dérouler sous agitation pendant 24 heures à température ambiante (20°C).

A l'issue des 24 heures de réaction, on a obtenu une conversion de 98 % (déterminée par RMN $^1H$).

Le gel ainsi obtenue a été soumis à une hydrolyse basique. Dans un ballon 100 ml on a introduit à température ambiante, 2g de gel et 8g d'eau distillé. La solution a été ajustée à pH 10 par l'ajout d'une solution de NaOH à 50% en masse. Le ballon a été ensuite chauffé à 65°C pendant 5 jours. La solution polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit la valeur de masse molaire moyenne en masse ($M_w$) suivant : 352000 g/mol.

**Exemple 6**

**Poly(Acrylamide/LA) 97,5/2,5 mol% nH 6,3 Mnth 10000 g/mol**

Dans un ballon de 250 mL, on a introduit, à température ambiante (20°C), 50g solution C, 13,17g Acrylamide (solution aqueuse a 50% en masse), 0,137g Rhodixan A1 et 6,32g Persulfate d'ammonium (solution aqueuse a 0,5% en masse). Le mélange a été dégazé par bullage d'azote pendant 30 minutes. On a ajouté au milieu, en une fois, 6,32g du formaldéhyde sulfoxylate de sodium, sous forme de solution aqueuse à 0,5 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 92 % (déterminée par RMN $^1H$).

Le gel ainsi obtenue a été soumis à une hydrolyse basique. Dans un ballon 100 ml on a introduit à température ambiante, 25,0g de gel et 27,4g d'eau distillé. On a alors ajouté 9,6 g d'une solution de NaOH à 25% en masse. Le ballon a été ensuite chauffé à 60°C pendant 24 heures. La solution polymère ainsi obtenue a été précipitée dans 250 mL MeOH, redissolue dans 10 mL d'eau et reprécipitée dans 100 mL MeOH. La polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 18 angles fournit la valeur de masse molaire moyenne en masse ($M_w$) suivant : 81400 g/mol.

**Exemple 7**

**Poly(Acrylamide/LA) 97,5/2,5 mol% nH 6,3 Mnth 250000 g/mol**

Dans un flacon de verre de 50 mL, on a introduit, à température ambiante (20°C), 25g solution C, 6,522g Acrylamide (solution aqueuse a 50% en masse), 0,283g Rhodixan A1 (solution ethanolique à 1,0% en masse) et 1,6g Persulfate d'ammonium (solution aqueuse à 1,0% en masse). Le mélange a été dégazé par bullage d'azote pendant 20 minutes. On a ajouté au milieu, en une fois, 1,6g du formaldéhyde sulfoxylate de sodium, sous forme de solution aqueuse à 1,0 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 95 % (déterminée par dosage d'acrylamide résiduel par HPLC).

Le gel ainsi obtenue a été soumis à une hydrolyse basique. Dans un ballon 100 ml on a introduit à température ambiante, 15,0g de gel et 25,0g d'eau distillé. On a alors ajouté 9,6 g d'une solution de NaOH à 25% en masse. Le ballon a été ensuite chauffé à 60°C pendant 24 heures. La solution polymère ainsi obtenue a été précipitée dans 250 mL EtOH, redissolue dans 10 mL d'eau et reprécipitée dans 200 mL EtOH. La polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 18 angles fournit la valeur de masse molaire moyenne en masse ($M_w$) suivant : 310000g/mol.

**Exemple 8**

**Poly(Acrylamide/LMA) 97,5/2,5 mol% nH 6,3 Mnth 10000 g/mol**

Dans un ballon de 250 mL, on a introduit, à température ambiante (20°C), 50g solution B, 13,07g Acrylamide (solution aqueuse a 50% en masse), 0,135g Rhodixan A1 et 6,28g Persulfate d'ammonium (solution aqueuse a 0,5% en masse). Le mélange a été dégazé par bullage d'azote pendant 30 minutes. On a ajouté au milieu, en une fois, 6,28g du formaldéhyde sulfoxylate de sodium, sous forme de solution aqueuse à 0,5 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 46 % (déterminée par RMN $^1H$).

Le gel ainsi obtenue a été soumis à une hydrolyse basique. Dans un ballon 100 ml on a introduit à température ambiante, 25,0g de gel et 27,4g d'eau distillé. On a alors ajouté 9,6 g d'une solution de NaOH à 25% en masse. Le ballon a été ensuite chauffé à 60°C pendant 24 heures. La solution polymère ainsi obtenue a été précipitée dans 250 mL MeOH, redissolue dans 10 mL d'eau et reprécipitée dans 100 mL MeOH. La polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 3 angles fournit la valeur de masse molaire moyenne en masse ($M_w$) suivant : 109900g/mol.

**Exemple 9**

**Poly(Acrylamide/LMA) 97,5/2,5 mol% nH 6,3 Mnth 250000 g/mol**

Dans un flacon de verre de 50 mL, on a introduit, à température ambiante (20°C), 25g solution B, 6,530g Acrylamide (solution aqueuse a 50% en masse), 0,277g Rhodixan A1 (solution ethanolique à 1,0% en masse) et 1,6g Persulfate d'ammonium (solution aqueuse à 1,0% en masse). Le mélange a été dégazé par bullage d'azote pendant 20 minutes. On a ajouté au milieu, en une fois, 1,6g du formaldéhyde sulfoxylate de sodium, sous forme de solution aqueuse à 1,0 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 93 % (déterminée par dosage d'acrylamide résiduel par HPLC).

Le gel ainsi obtenue a été soumis à une hydrolyse basique. Dans un ballon 100 ml on a introduit à température ambiante, 15,0g de gel et 25,0g d'eau distillé. On a alors ajouté 9,6 g d'une solution de NaOH à 25% en masse. Le ballon a été ensuite chauffé à 60°C pendant 24 heures. La solution polymère ainsi obtenue a été précipitée dans 250 mL EtOH, redissolue dans 10 mL d'eau et reprécipitée dans 200 mL EtOH. La polymère ainsi obtenue a été analysée par chromatographie d'exclusion stérique.

Une analyse en chromatographie d'exclusion stérique dans l'eau additivé de NaCl 100mM NaH2PO4 25mM, Na2HPO4 25mM solution tampon pH=7 avec un détecteur MALLS 18 angles fournit la valeur de masse molaire moyenne en masse ($M_w$) suivant : 357000 g/mol.

**Exemple 10**

**Poly(Acrylamide/LMAM) 97,5/2,5 mol% nH 6,3 Mnth 10000 g/mol**

Dans un flacon en plastique de 150 mL, on a fait un mélange de 50,0g solution D, 13,0g acrylamide (solution aqueuse a 50% en masse), et 0,146g Rhodixan A1. On a introduit 5 mL de cette solution dans un flacon en verre de 5 mL. On a ajouté 0,3 mL d'une solution de persulfate d'ammonium (solution aqueuse à 5,0% en masse) et 0,3 mL du formaldéhyde sulfoxylate de sodium, sous forme de solution aqueuse à 0,25 % en masse. Le mélange a été dégazé par bullage d'azote pendant 5 minutes.

On a alors laissé la réaction de polymérisation se dérouler sans agitation pendant 16 heures à température ambiante (20°C).

A l'issue des 16 heures de réaction, on a obtenu une conversion de 97 % (déterminée par dosage d'acrylamide résiduel par HPLC).

Le polymère a été précipité dans 15 mL d'éthanol, et ensuite redissolu dans 15 mL d'eau auquel a été ajouté 1g de NaOH. On a alors laissé cette solution réagir pendant 72h, puis précipité le polymère dans 50 mL d'éthanol. Le

polymère ainsi obtenu a été analysé par chromatographie d'exclusion stérique.

Une analyse en chromatographie d'exclusion stérique dans l'eau additivé de NaCl 1,00mM NaH2PO4 25mM, Na2HPO4 25mM solution tampon pH=7 avec un détecteur MALLS 18 angles fournit la valeur de masse molaire moyenne en masse ($M_w$) suivant : 25600 g/mol.

**Exemple 11**

**Poly(Acrylamide/LMAM) 97,5/2,5 mol% nH 6,3 Mnth 500000 g/mol**

Dans un ballon de 250 mL, on a introduit, à température ambiante (20°C), 100g solution D, 26,0g Acrylamide (solution aqueuse a 50% en masse), 0,541g Rhodixan A1 (solution éthanolique à 1,0% en masse) et 6,24g Persulfate d'ammonium (solution aqueuse a 1,0% en masse). Le mélange a été dégazé par bullage d'azote pendant 30 minutes. On a ajouté au milieu, en une fois, 6,26g du formaldéhyde sulfoxylate de sodium, sous forme de solution aqueuse à 1,0 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 90,3 % (déterminée par dosage d'acrylamide résiduel par HPLC).

Le gel ainsi obtenue n'a pas pu être hydrolysé à cause de la résistance du groupement méthacrylamide à l'hydrolysation.

**Exemple 12**

**Poly(Acrylamide/AMPS/LMAM) 79,6/19,9/0,5 mol% nH 4,0 Mnth 500000 g/mol**

Dans un ballon de 250 mL, on a introduit, à température ambiante (20°C), 30,3g solution E, 69,9g eau, 20.8g acrylamide (solution aqueuse a 50% en masse), 16.3g AMPS (solution aqueuse a 50% en masse), 0,540g Rhodixan A1 (solution éthanolique à 1,0% en masse) et 6,00g Persulfate d'ammonium (solution aqueuse a 5,0% en masse). Le mélange a été dégazé par bullage d'azote pendant 20 minutes. On a ajouté au milieu, en une fois, 1,5g du formaldéhyde sulfoxylate de sodium, sous forme de solution aqueuse à 1,0 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 64,6 % (déterminée par dosage d'acrylamide et d'AMPS résiduels par HPLC).

Le gel ainsi obtenue n'a pas pu être hydrolysé à cause de la résistance du groupement méthacrylamide à l'hydrolysation.

**Exemple 13**

**Poly(Acrylamide/AMPS/LMAM) 79,6/19,9/0,5 mol% nH 4,0 Mnth 500000 g/mol**

Dans un ballon de 250 mL, on a introduit, à température ambiante (20°C), 30,3g solution E, 69,7g eau, 20,8g acrylamide (solution aqueuse a 50% en masse), 16,3g AMPS (solution aqueuse a 50% en masse), 1,111g mercaptoéthanol (solution aqueuse à 0,5% en masse) et 6,00g Persulfate d'ammonium (solution aqueuse a 5,0% en masse). Le mélange a été dégazé par bullage d'azote pendant 20 minutes. On a ajouté au milieu, en une fois, 1,5g du formaldéhyde sulfoxylate de sodium, sous forme de solution aqueuse à 1,0 % en masse. Le mélange a été dégazé par bullage d'azote pendant 15 minutes.

On a alors laissé la réaction de polymérisation se dérouler sous agitation pendant 16 heures à température ambiante (20°C).

A l'issue des 16 heures de réaction, on a obtenu une conversion de 80,7 % (déterminée par dosage d'acrylamide et d'AMPS résiduels par HPLC).

Le gel ainsi obtenue n'a pas pu être hydrolysé à cause de la résistance du groupement méthacrylamide à l'hydrolysation.

**Exemple 14 filtrabilité solution de polymère**

Les polymères issus des exemples 12 (synthèse contrôlée par un agent de transfert réversible) et de l'exemple

13 (agent de transfert non réversible) ont été solubilisés à 0,2% en polymère actif dans une solution aqueuse de chlorure de potassium à 1% en masse (solution préparée à partir de 10g de KCl complété à 1kg par de l'eau permutée). Les solutions sont placées 24h sous agitation magnétique puis conditionnées pendant 6 heures à 60°C pour assurer une solubilisation ou une dispersion la plus complète possible.

On a réalisé un test de filtrabilité qui consiste à faire passer à travers un filtre de céramique de porosité connue la solution devant servir au balayage du milieu poreux. Les disques céramiques utilisés ici ont une épaisseur de 6.2mm et sont de perméabilité de 775mD (mesuré par perméabilité/injectivité de mercure) soit des tailles de pores de 10μm en moyenne (ces disques sont disponibles chez OFITE sous la référence 170-55).

Dans une cellule de filtration en inox (disponible chez OFITE sous la référence 170-46 : HTHP double end assembly for ceramic disks) pouvant contenir 175mL de solution sont placés 100mL de solution de polymère à 0.2%. La température est stabilisée à 60°C pendant 15mn avant de démarrer l'essai de filtration.
Une pression d'azote de 0,35bars est appliquée et la masse récoltée en sortie de filtre est enregistrée en fonction du temps.

L'évolution des masses récoltées en fonction du temps pour les solutions à 0,2% de polymères des exemples 12 et 13 lors de la filtration à 60°C (dites masses filtrées) est reportée sur les Figure 1 et Figure 2 ci-annexées.

Lors de ce test il apparait très clairement que le polymère de l'exemple 12 est injectable dans un milieu poreux. La masse récoltée croît linéairement. Il n'y a pas d'accumulation ou de bouchage du filtre par le polymère et la totalité de la solution peut être filtrée en moins de 2 minutes. Au contraire le polymère de l'exemple 13, montre un profil typique de bouchage du filtre et d'accumulation d'un gâteau de filtration au dessus du filtre avec une vitesse de passage de fluide décroissant en fonction du temps. Par ailleurs, il n'est pas possible de filtrer la totalité de la solution dans un temps raisonnable et l'essai est arrêté au bout d'une heure avec moins de 10% de la solution filtrée. Finalement lors du démontage de la cellule, on observe un gâteau de filtration de gel d'environ 2mm d'épaisseur au dessus du filtre.

A la vue de cet exemple, l'intérêt du contrôle de la polymérisation par un agent de contrôle réversible apparait clairement dans le cadre de l'application de solutions de polymères pour le balayage d'un milieu poreux.

## Revendications

**1.** Procédé de préparation d'un copolymère séquencé, qui comprend une étape (E) de polymérisation radicalaire micellaire dans laquelle on met en contact, au sein d'un milieu aqueux (M) :

- des monomères hydrophiles, solubilisés ou dispersés dans ledit milieu aqueux (M) ;
- des monomères hydrophobes sous la forme d'une solution micellaire, à savoir contenant, à l'état dispersé au sein du milieu (M), des micelles comprenant ces monomères hydrophobes;
- au moins un amorceur de polymérisation radicalaire, de préférence hydrosoluble ou hydrodispersible ; et
- au moins un agent de contrôle de polymérisation radicalaire.

**2.** Procédé selon la revendication 1, où l'agent de contrôle de polymérisation radicalaire est un composé qui comprend un groupe thiocarbonylthio -S(C=S)-, par exemple un xanthate.

**3.** Procédé selon la revendication 1 ou 2, où l'agent de contrôle de polymérisation radicalaire est un oligomère à caractère hydrosoluble ou hydrodispersible porteur d'un groupe thiocarbonylthio -S(C=S)-, par exemple d'un groupe xanthate -SC=S-O-

- est soluble ou dispersible dans le milieu aqueux (M) employé dans l'étape (E) ; et/ou
- n'est pas propre à pénétrer dans les micelles de la solution micellaire

**4.** Procédé selon la revendication 3, où l'agent de contrôle de polymérisation radicalaire est un pré-polymère porteur d'un groupe thiocarbonylthio -S(C=S)-, par exemple d'un groupe xanthate, obtenu à l'issue d'une étape ($E^0$), préalable à l'étape (E), ladite étape ($E^0$) mettant en contact

- des monomères hydrophiles, de préférence identiques à ceux de l'étape (E) ;
- un amorceur de polymérisation radicalaire ; et
- un agent de contrôle porteur d'un groupe thiocarbonylthio -S(C=S)-, par exemple un xanthate.

**5.** Procédé selon l'une des revendications 1 à 4, où les monomères hydrophiles de l'étape (E) comprennent de l'acide (meth)acrylique ou des monomères acrylamido ou methacrylamido.

**6.** Procédé selon la revendication 5, où les monomères de l'étape (E) sont des (meth)acrylamides.

**7.** Procédé selon l'une des revendications 1 à 6, où l'amorceur de polymérisation radicalaire employé l'étape (E) est un amorceur redox.

**8.** Procédé selon la revendication 7, où l'amorceur redox comprend l'association de persulfate d'ammonium et de formaldéhyde sulfoxylate de sodium.

**9.** Procédé selon l'une des revendications 1 à 8, où le milieu réactionnel de l'étape (E) est exempt de cuivre ou bien comprend du cuivre en association avec un agent complexant du cuivre tel que l'EDTA, en une quantité propre à masquer sa présence.

**10.** Procédé selon l'une des revendications 1 à 9, où le procédé de l'invention comprend, après l'étape (E), une étape (E1) d'hydrolyse, d'ozonolyse ou de réaction avec des amines, propre à désactiver et/ou détruire tout ou partie des groupes de transfert présents sur le polymère préparé dans l'étape (E).

**11.** Polymère séquencé susceptibles d'être obtenu selon le procédé de l'une des revendications 1 à 9.

**12.** Utilisation d'un polymère selon la revendication 11 pour la régulation de la rhéologie d'un milieu liquide, notamment aqueux.

**13.** Utilisation selon la revendication 12, où le polymère est employé à titre d'agent régulateur de la rhéologie pour l'extraction de pétrole ou de gaz naturel, notamment pour la constitution de fluides de forage, pour la fracturation, pour la stimulation ou pour la récupération assistée du pétrole.

**14.** Utilisation selon la revendication 12, où le polymère est employé pour une récupération assisté de pétrole EOR.

## Patentansprüche

**1.** Verfahren zur Herstellung eines Blockcopolymers mit einem Schritt (E) der mizellaren Radikalpolymerisation, bei dem man in einem wässrigen Medium (M):

- in dem wässrigen Medium (M) gelöste oder dispergierte hydrophile Monomere;
- hydrophobe Monomere in Form einer mizellaren Lösung, d.h. einer diese hydrophoben Monomere umfassende Mizellen, die in dem Medium (M) dispergiert sind, enthaltenden Lösung;
- mindestens einen Radikalpolymerisationsinitiator, der vorzugsweise wasserlöslich oder wasserdispergierbar ist; und
- mindestens ein Mittel zur Steuerung der Radikalpolymerisation

in Berührung bringt.

**2.** Verfahren nach Anspruch 1, wobei das Mittel zur Steuerung der Radikalpolymerisation eine Verbindung mit einer Thiocarbonylthiogruppe -S(C=S)-, beispielsweise ein Xanthat, ist.

**3.** Verfahren nach Anspruch 1 oder 2, wobei das Mittel zur Steuerung der Radikalpolymerisation ein Oligomer mit wasserlöslichem oder wasserdispergierbarem Charakter, das eine Thiocarbonylthiogruppe

- S(C=S)-, beispielsweise eine Xanthatgruppe -SC=S-O-, trägt, ist,
- in dem in Schritt (E) eingesetzten wässrigen Medium (M) löslich oder dispergierbar ist; und/oder
- nicht dazu in der Lage ist, in die Mizellen der mizellaren Lösung einzudringen.

**4.** Verfahren nach Anspruch 3, wobei das Mittel zur Steuerung der Radikalpolymerisation ein nach einem Schritt ($E^0$), vor dem Schritt (E) erhaltenes Prepolymer, das eine Thiocarbonylthiogruppe

- S(C=S)-, beispielsweise eine Xanthatgruppe, trägt, ist, wobei man in Schritt ($E^0$)
- hydrophile Monomere, die vorzugsweise mit denjenigen von Schritt (E) identisch sind;
- einen Radikalpolymerisationsinitiator; und
- ein Steuerungsmittel, das eine Thiocarbonylthiogruppe -S(C=S)- trägt, beispielsweise ein Xanthat; in Berührung bringt.

5. Verfahren nach einem der Ansprüche 1 bis 4, wobei die hydrophilen Monomere von Schritt (E) (Meth)acrylsäure oder Acrylamid- oder Methacrylamid-Monomere umfassen.

6. Verfahren nach Anspruch 5, wobei es sich bei den Monomeren von Schritt (E) um (Meth)acrylamide handelt.

7. Verfahren nach einem der Schritte 1 bis 6, wobei es sich bei dem in Schritt (E) eingesetzten Radikalpolymerisationsinitiator um einen Redox-Initiator handelt.

8. Verfahren nach Anspruch 7, wobei der Redox-Initiator die Kombination von Ammoniumpersulfat und Natriumformaldehydsulfoxylat umfasst.

9. Verfahren nach einem der Ansprüche 1 bis 8, wobei das Reaktionsmedium von Schritt (E) frei von Kupfer ist oder auch Kupfer in Kombination mit einem Kupferkomplexbildner wie EDTA in einer Menge, die sein Vorliegen maskieren kann, umfasst.

10. Verfahren nach einem der Ansprüche 1 bis 9, wobei das erfindungsgemäße Verfahren nach Schritt (E) einen Schritt (E1) der Hydrolyse, Ozonolyse oder Umsetzung mit Aminen, durch den die an dem in Schritt (E) hergestellten Polymer vorliegenden Übertragungsgruppen ganz oder teilweise desaktiviert und/oder zerstört werden können, umfasst.

11. Blockcopolymer, das nach dem Verfahren gemäß einem der Ansprüche 1 bis 9 erhältlich ist.

12. Verwendung eines Polymers nach Anspruch 11 zur Regulierung der Rheologie eines flüssigen, insbesondere wässrigen, Mediums.

13. Verwendung nach Anspruch 12, wobei das Polymer als Mittel zur Regulierung der Rheologie zur Förderung von Erdöl oder Erdgas, insbesondere zur Herstellung von Bohrflüssigkeiten, zum Aufbrechen, zur Stimulation oder zur tertiären Erdölgewinnung eingesetzt wird.

14. Verwendung nach Anspruch 12, wobei das Polymer zur tertiären Erdölgewinnung EOR eingesetzt wird.

## Claims

1. Process for preparing a block copolymer, which comprises a step (E) of micellar radical polymerization in which the following are placed in contact, in an aqueous medium (M):

   - hydrophilic monomers, dissolved or dispersed in said aqueous medium (M);
   - hydrophobic monomers in the form of a micellar solution, i.e. containing, in dispersed form in the medium (M), micelles comprising these hydrophobic monomers;
   - at least one radical polymerization initiator, which is preferably water-soluble or water-dispersible; and
   - at least one radical polymerization control agent.

2. Process according to Claim 1, in which the radical polymerization control agent is a compound which comprises a thiocarbonylthio group -S(C=S)-, for example a xanthate.

3. Process according to Claim 1 or 2, in which the radical polymerization control agent is an oligomer of water-soluble or water-dispersible nature bearing a thiocarbonylthio group -S(C=S)-, for example a xanthate group -SC=S-O-

   - is soluble or dispersible in the aqueous medium (M) used in step (E); and/or
   - is not capable of penetrating into the micelles of the micellar solution.

4. Process according to Claim 3, in which the radical polymerization control agent is a prepolymer bearing a thiocarbonylthio group -S(C=S)-, for example a xanthate group, obtained after a step (E°), prior to step (E), said step (E°) placing the following in contact:

   - hydrophilic monomers, preferably identical to those of step (E);
   - a radical polymerization initiator; and

- a control agent bearing a thiocarbonylthio group - S(C=S)-, for example a xanthate.

**5.** Process according to one of Claims 1 to 4, in which the hydrophilic monomers of step (E) comprise (meth)acrylic acid and/or acrylamido or methacrylamido monomers.

**6.** Process according to Claim 5, in which the monomers of step (E) are (meth)acrylamides.

**7.** Process according to one of Claims 1 to 6, in which the radical polymerization initiator used in step (E) is a redox initiator.

**8.** Process according to Claim 7, in which the redox initiator comprises a combination of ammonium persulfate and sodium formaldehyde sulfoxylate.

**9.** Process according to one of Claims 1 to 8, in which the reaction medium of step (E) is free of copper or comprises copper in combination with a copper-complexing agent such as EDTA, in an amount capable of masking its presence.

**10.** Process according to one of Claims 1 to 9, in which the process of the invention comprises, after step (E), a step (E1) of hydrolysis, ozonolysis or reaction with amines, which is capable of deactivating and/or destroying all or some of the transfer groups present on the polymer prepared in step (E).

**11.** Block polymer that may be obtained according to the process of one of Claims 1 to 9.

**12.** Use of a polymer according to Claim 11, for regulating the rheology of a liquid medium, especially an aqueous medium.

**13.** Use according to Claim 12, in which the polymer is used as a rheology regulator for extracting oil or natural gas, especially for making drilling fluids, for fracturing, for stimulation or for enhanced oil recovery.

**14.** Use according to Claim 12, in which the polymer is used for an enhanced oil recovery EOR.

## FIGURE 1

polymère de l'exemple 12

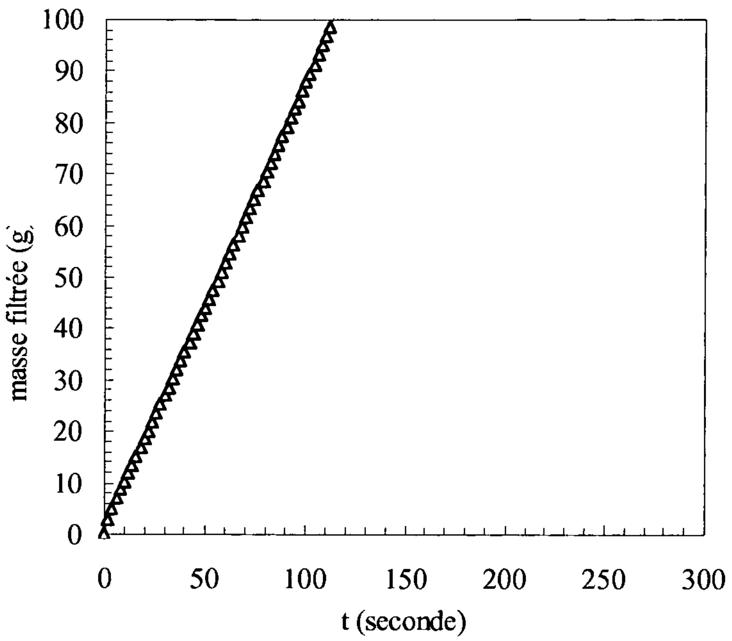


## FIGURE 2

polymère de l'exemple 13

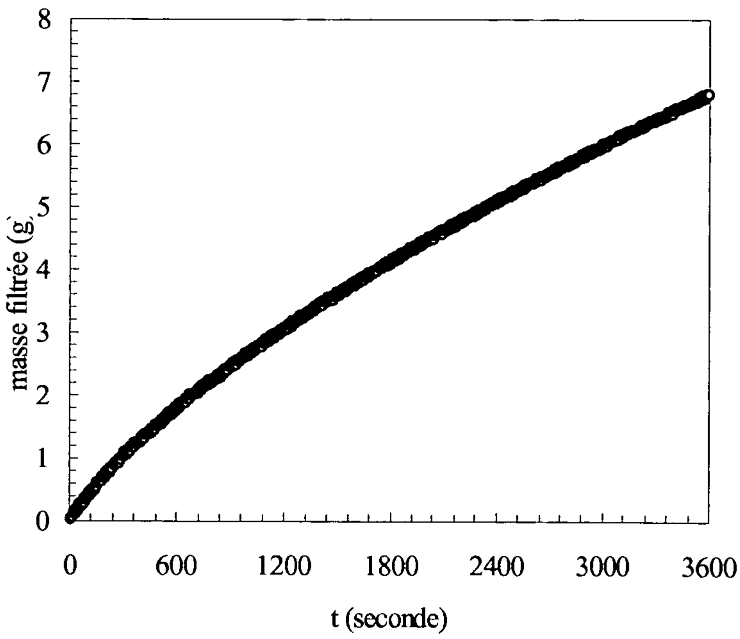

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4432881 A
- US 6207771 B
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- US 4565647 A
- WO 03068827 A
- WO 03068848 A
- WO 2005021612 A
- US 4584358 A

### Littérature non-brevet citée dans la description

- *Polymer,* 1996, vol. 36 (16), 3197-3211
- *Macromolecular Chem. Physics,* 2001, vol. 202 (8), 1384-1397